# EUROPEAN PATENT APPLICATION

(11) **EP 2 746 573 A2**
(43) Date of publication of application: **25.06.2014**
(21) Application number: 13196910.7
(22) Date of filing: 12.12.2013
(51) Int. Cl.: F03D 1/06

(54) **Rotor blade assemblies and methods for assembling the same**

(30) Priority: 19.12.2012 US 201213719739
(71) Applicant: General Electric Company, Schenectady, New York 12345 (US)
(72) Inventor: Livingston, Jamie Thomas, Greenville, SC 29615 (US)
(74) Representative: Bedford, Grant Richard

(57) **Abstract**

Methods of assembling rotor blades 10 include providing a first blade segment 12 comprising a first shell portion 19 and at least two first spar cap segments 26 and providing a second blade segment 14 comprising a second shell portion 21 and at least two second spar cap segments 28. An access region 25 is defined in at least one of the first shell portion and the second shell portion 19, 21. The second blade segment 14 is then inserted into the first blade segment 12, such that a spar cap cavity 36 is formed between each set of corresponding first and second spar cap segments 26, 28, and wherein an access window 27 is defined by the access region 25 at an interface between the first blade segment 12 and the second blade segment 14, the access window 27 providing access to the spar cap cavities 36. The method further includes sealing the spar cap cavities 36 and injecting an adhesive into the spar cap cavities 36 to bond the blade segments 26, 28 together, wherein a scarf joint 38 is formed between each set of corresponding first and second spar cap segments 26, 28.

## Description

The subject matter disclosed herein relates generally to rotor blades and, more specifically, to methods of assembling jointed rotor blades.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The construction of a modem rotor blade generally includes skin or shell components and one or more internal structural components, such as spar caps and one or more shear webs. The skin/shell, typically manufactured from layers of fiber composite and/or a lightweight core material, forms the exterior aerodynamic airfoil shape of the rotor blade. The spar caps provide increased rotor blade strength by integrating one or more structural elements running along the length of the rotor blade on both interior sides of the rotor blade. Shear webs are structural beam-like components running essentially perpendicular between the top and bottom spar caps and extending across the interior portion of the rotor blade between the outer skins. Spar caps have typically been constructed from glass fiber reinforced composites, though some larger blades may include spar caps constructed from carbon fiber reinforced composites.

The size, shape, and weight of rotor blades are factors that generally contribute to energy efficiencies of wind turbines. For example, an increase in rotor blade size can increase the energy production of a wind turbine. Thus, to ensure that wind power remains a viable energy power source, efforts have been made to increase energy outputs by increasing the length wind turbine blades. For instance, larger wind turbines may have rotor blades 70 meters in radius and larger.

To allow such larger rotor blades to be manufactured and transported, it is often necessary to form the rotor blades in two or more pieces, which must then be assembled at the wind turbine site. For example, known rotor blade assemblies may be formed as a two-piece construction, having both a fully formed tip piece and a fully formed root piece. Thus, to assemble the tip and root pieces, conventional methods require that both the skin/shell components and internal structural components of the pieces be attached simultaneously. Accordingly, the internal structural components of the pieces are often connected blindly, as physical and visual access to such components is blocked by the outer shell components. With such blind connections, it is often difficult and/or impossible to ensure that the internal structural components of the root piece and the tip piece are connected properly. As such, the structural integrity of the rotor blade, particularly at the interfaces of the tip and root pieces, can be affected. Moreover, because of the blind connection of the internal structural components, it is often the case that excess bonding material, such as excessive amounts of adhesive bonding materials, is used to compensate for the lack of access to the internal joints and/or connections of the rotor blade.

Accordingly, alternative rotor blade assemblies and methods for assembling rotor blade assemblies would be welcome in the art.

In one embodiment, a method of assembling a rotor blade is disclosed. The method includes providing a first blade segment comprising a first shell portion and at least two first spar cap segments and providing a second blade segment comprising a second shell portion and at least two second spar cap segments. An access region is defined in at least one of the first shell portion and the second shell portion. The method further includes inserting the second blade segment into the first blade segment, wherein a spar cap cavity is formed between each set of corresponding first and second spar cap segments, and wherein an access window is defined by the access region at an interface between the first blade segment and the second blade segment, the access window providing access to the spar cap cavities. The method finally includes sealing the spar cap cavities and injecting an adhesive into the spar cap cavities to bond the blade segments together, wherein a scarf joint is formed between each set of corresponding first and second spar cap segments.

In another embodiment, a rotor blade assembly is disclosed. The rotor blade assembly includes a first blade segment comprising a first shell portion and at least two first spar cap segments, and a second blade segment comprising a second shell portion and at least two second spar cap segments, wherein an access region is defined in at least one of the first shell portion and the second shell portion. The second blade segment is inserted into the first blade segment a spar cap cavity is formed between each set of corresponding first and second spar cap segments, and wherein an access window is defined by the access region at an interface between the first blade segment and the second blade segment, the access window providing access to the spar cap cavities.

Various additional features provided by the embodiments discussed herein will be more fully understood in view of the following detailed description, in conjunction with the drawings.

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
Fig. 1 illustrates a wind turbine blade according to one or more embodiments shown or described herein;
Fig. 2 illustrates a sectional view taken along line 2 - 2 in Fig. 1 according to one or more embodiments shown or described herein;
Fig. 3 illustrates a sectional view taken along line 3 - 3 in Fig. 1 and illustrates a second blade segment being inserted into first blade segment according to one or more embodiments shown or described herein;
Fig. 4 illustrates a leading edge view of first and second blade segments with an additional blade segment at the access window according to one or more embodiments shown or described herein;
Fig. 5 illustrates a perspective view of first and second blade segments having an access window according to one or more embodiments shown or described herein; and,
Fig. 6 illustrates a sectional view taken along line 3 - 3 in Fig. 1 and illustrates a second blade segment fully inserted into a first blade segment according to one or more embodiments shown or described herein.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

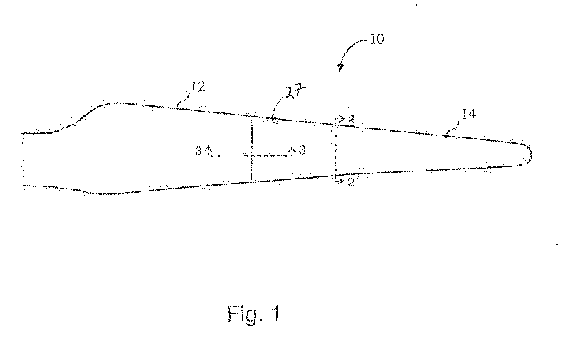

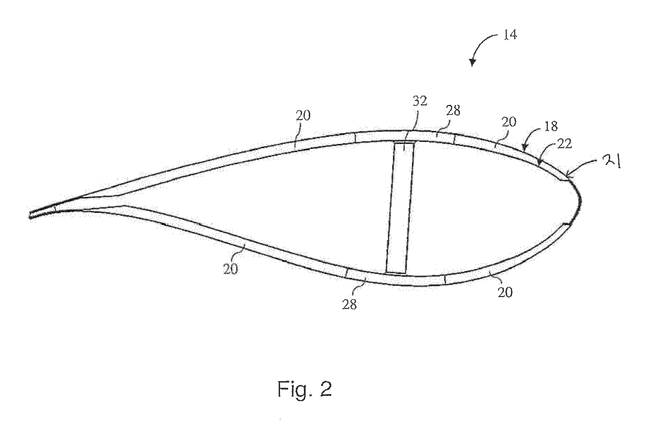

Embodiments disclosed herein include methods of assembling a jointed rotor blade. The methods allow transport of blade components to a secondary site or field site where the components can be assembled to form the turbine blade. Referring to Figs. 1, 2 and 3, a rotor blade 10 includes a first blade segment 12 and a second blade segment 14. The first and second blade segments 12 and 14 are each hollow segments comprising a first shell portion 19 and a second shell portion 21 respectively. In some embodiments, the first shell portion 19 and the second shell portion 21 can each comprise outer skin 18, skin core 20, and inner skin 22. The outer skin 18, skin core 20, and inner skin 22 are made from materials that are light-weight and strong.

The first blade segment 12 includes at least two first spar cap segments 26, and the second blade segment 14 includes at least two second spar cap segments 28. The first and second spar cap segments 26, 28 are configured to form a scarf joint there between. A shear web 32 connects the first spar cap segments 26 in the first blade segment 12. Similarly, a shear web 32 connects the second spar cap segments 28 in the second blade segment 14. The spar cap segments bear longitudinal-loads experienced by the rotor blades and are attached to the inner skin 22 of the respective blade segments. In one embodiment, the outer skin 18 and spar cap segments 26 and 28 are comprised of composite glass or carbon, and the skin core 20 and shear web 32 are comprised of foam or balsa.

As best illustrated in Figs. 1 and 3-5, an access region 25 is defined in at least one of the first shell portion 19 and the second shell portion 21. As will become appreciated herein, the access region 25 can define an access window 27 when the second blade segment 14 is inserted into the first blade segment 12 such that the access window 27 provides access to an interior of the rotor blade 10. The access region 25 may generally comprise any opening or removed area defined and/or formed in the skin/shell of the rotor blade 10 and may have any suitable length.

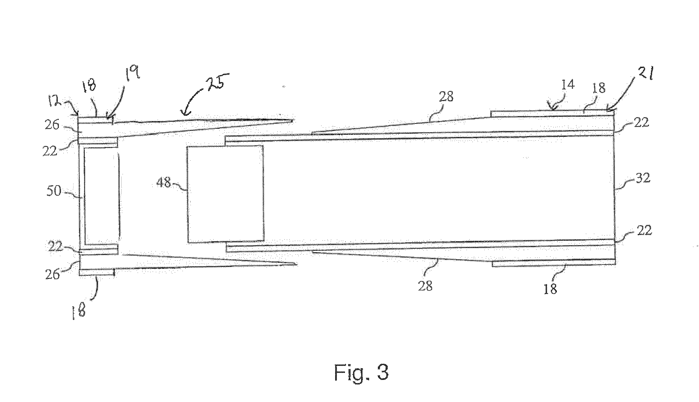

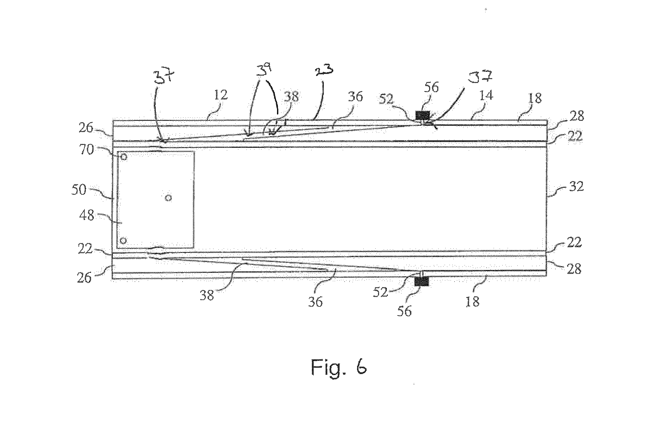

Specifically, the access region 25 can comprise any shape or configuration comprising a lack of shell portion 19, 21. In some embodiments, the access region 25 may only be defined in either the first shell portion 19 of the first blade segment 12 or in only the second shell portion 21 of the second blade segment 14. However, in some embodiments, the access region 25 may be defined in both the first shell portion 19 of the first blade segment 12 as well as the second shell portion 21 of the second blade segment 14. Furthermore, the access region 25 may be disposed at a variety of positions around the circumference of the rotor blade 10. For example, in some embodiments, the access region 25 may be formed at the leading edge or the trailing edge of at least one of the first blade segment 12 and the second blade segment 14. As illustrated in Figs. 3-6, the second blade segment 14 is inserted into the first blade segment 12 wherein a spar cap cavity 36 and scarf joint 38 are formed between each corresponding set of first and second spar cap segments 26, 28. The spar cap cavity 36 specifically comprises the void between the first and second spar cap segments 26, 28 and can be defined by two longitudinal sides 37 and two transverse sides 39. The spar cap cavity 36 and its boundary sides 37, 39 can vary in configuration based on the respective shapes of the first and second spar cap segments 26, 28. As will be discussed below, the spar cap cavity can be sealed and filled with adhesive to bond the first and spar cap segments 26, 28 (and thus the first and second blade segments 12 and 14) together.

In additional to the scarf joint 38 at the spar cap cavity 36, one or more other joints may also be present from the other components of the first blade segment 12 and second blade segment 14. For example, in one embodiment, a joint also exists in the shear web 32. For example, a butt joint may exist in the shear web 32 wherein a shear web doubler plate 48 is located on each side of the shear web. The shear web joint can have an alternate configuration, such as a scarf joint. The shear web doubler plates 48 are potentially attached to the second blade segment 14 before joining the first and second blade segments together, as illustrated in Fig. 3 (only one shear web doubler plate 48 is shown). A shear web sealing pad 50 may be attached to the first blade segment 12. When the second blade segment 14 is inserted into the first blade segment 12, the shear web doubler plates 48 abut against the shear web sealing pad 50, thereby positioning any free edges of the shear web doubler plates 48 against the shear web sealing pad 50. A shear web joint cavity (not shown) is formed between the shear web doubler plates 48. Moreover, in one embodiment, after the blade segments 12, 14 are positioned together, a skin joint 52 is formed between the outer skin 18, skin core 20, and inner skin 22 of the first blade segment 12 and the second blade segment 14, as illustrated in Figs. 3-6.

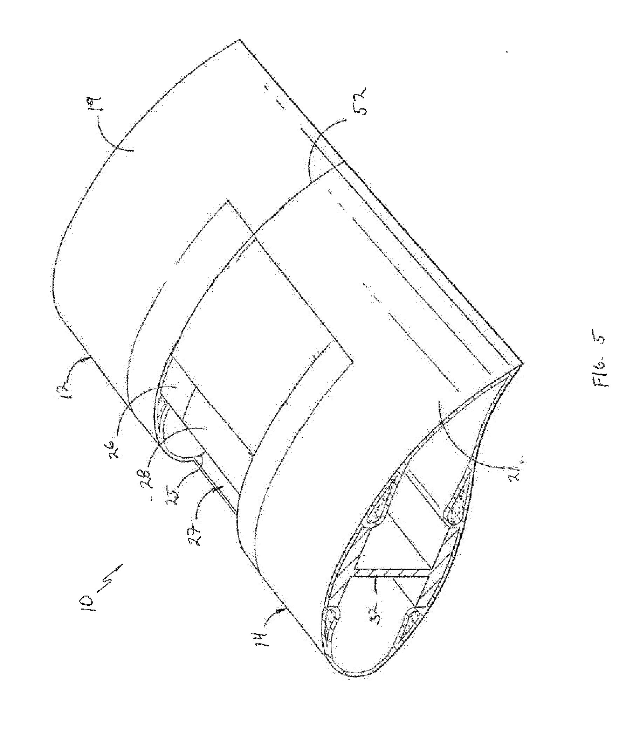

As best illustrated in Fig. 5, after the first and second blade segments 12, 14 are positioned together, the access region 25 discussed above defines an access window 27. The access window 27 may generally be configured to provide access to the spar cap cavity 36 and potentially additional parts of the interior of the rotor blade assembly 10. By accessing the spar cap cavities 36 through the access window 27, the spar cap cavities 36 (and particular their longitudinal sides 39 and transverse sides 39) can be sealed. The outer seal can be achieved through any suitable sealant such as, for example, tape, epoxy and/or glass composites. In some embodiments, the seal may comprise one or more injection ports (not illustrated) for injecting adhesive into the spar cap cavities 36 as should be appreciated herein.

After the spar cap cavities 36 are sealed, an adhesive can be injected into the spar cap cavities to bond the first and second spar cap segments 26, 28 (and thus the first and second blade segments 12, 14) together. In one embodiment, the adhesive comprises materials such as epoxies; urethanes, including polyurethane; cyclopentadienes, including dicyclopentadiene; methylmethacrylates; vinylesters; or polyesters. If necessary, the adhesive can be cured following the injection process using any curing method known to those having skill in the art.

In some embodiments, the access window 27 may also be configured to provide visual access to other parts of the interior of the rotor blade 10 such that internal interfaces of the shells and/or internal structural components (e.g., shear web 32) of the first blade segment 12 and the second blade segment 14 may be visually assessed to ensure that such components are properly secured to one another. Accordingly, service workers may be allowed, depending on the size of the access window 27 to reach, bend and/or climb into the interior of the rotor blade assembly 10 through the access window 27 to ensure proper attachment of the first blade segment 12 to the second blade segment 14.

For instance, the access window 27 in such embodiments may enable service workers to precisely apply a sufficient amount of adhesive between other internal structural components (e.g., the shear web 32) and/or at other interfaces of the first shell portion 19 and the second shell portion 21. Such embodiments can ensure proper bonding between other components while potentially decreasing material costs. Alternatively, the access window 27 may enable such components to be quickly and easily fastened to one another using any other suitable means, such as by using screws, bolts, brackets or any other suitable dry-fit attachment mechanism known in the art.

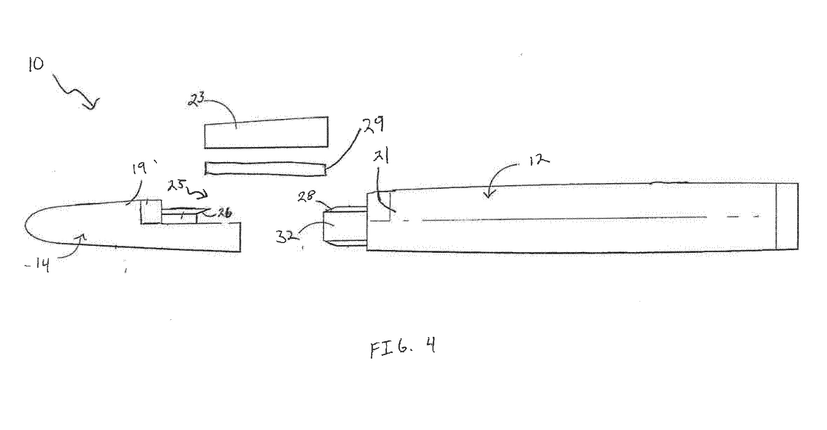

As best illustrated in Fig. 4, before, after or in conjunction with the connecting and/or sealing of the various components of the first blade segment 12 and the second blade segment 14, the access window 27 may be covered by an additional shell segment 23 (and potentially an additional structural element 29).

The additional shell segment 23 may generally be configured to fit over or otherwise cover the access window 27 formed during assembly of the first shell segment 12 and the second shell segment 14. Thus, it should be appreciated that the additional shell segment 23 may generally define any shape and/or profile which corresponds to the aerodynamic shape and/or profile of the rotor blade assembly 10 in the location at which the additional shell segment 23 is being secured over the access window 27. As such, when the additional shell segment 23 is secured over the access window 27, a substantially continuous aerodynamic shape and/or profile may be achieved.

It should be appreciated that the additional shell segment 23 may generally be secured to the first shell segment 12 and/or the second shell segment 14 using any suitable means. For example, in one embodiment, the additional shell segment 23 may be bonded to the first shell portion 19 and/or the second shell portion 21, such as by using any suitable adhesive bonding material. Alternatively, the additional shell segment 23 may be attached to the first shell portion 19 and/or the second shell portion 21 using any other suitable fastening means, such as by using screws, bolts, a tongue and groove fit, interference fit, brackets or using any other suitable dry-fit attachment mechanism and/or method. Additionally, in one embodiment, the additional shell segment 23 may be removably secured or attached to the first shell portion 19 and/or the second shell portion 21 such that the additional shell segment 23 may be removed from the rotor blade 10 at any time to make repairs, to check the internal connections of the rotor blade 10 and/or to perform any other suitable action.

Moreover, the additional shell segment 23 may include any suitable attachment features (not illustrated), such as beveled or knife edges, to facilitate attachment of the additional shell segment 23 to the first blade segment 12 and/or the second place segment 14. Additionally, the first shell portion 19 and/or the second shell portion 21 may also define one or more attachment features. For example, the first shell portion 19 and/or the second shell portion 21 may define an angled or recessed portion configured to receive corresponding angled or recessed portions (not illustrated) of the additional shell segment 23. One of ordinary skill in the art should appreciate that various other suitable attachment features, such as a keyed attachment features (e.g., tongue and groove connections), may also be included on the additional shell segment 23 and/or the first shell portion 19 and the second shell portion 21 to facilitate attachment between such components.

Still referring to Fig. 4, in some embodiments, an additional structural element 29 may first be connected to at least one of the first shell portion 19 and the second shell portion 21. The additional structural element 29 can provide further structural support to the rotor blade 10 about the access window 27 when being covered. Such embodiments may particularly be realized when the access window 27 is disposed at the leading or trailing edge.

The additional structural element 29 can comprise any material that provides sufficient structural support for the particular location of the access windows 27 that is being covered. For example, in some embodiments the additional structural element 29 can comprise glass, carbon or comprise the same material as the first and second spar cap segments 26, 28. In even some embodiments, the additional structural element 29 may be integral with the additional shell segment 23 such that only one piece needs to be secured to the rotor blade 10 to cover the access window 27. Moreover, the additional structural element 29 can be connected to at least one of the first shell portion 19 and the second shell portion 21 using any of the methods described above with respect to the additional shell segment 23 such as angled or recessed edge portions or other attachment features.

It should now be appreciated that rotor blade assemblies may be provided with joints to allow for the transportation of long rotor blades in multiple pieces or otherwise provide for the retrofitting extension of a preexisting rotor blade. By further providing an access region in at least one of the blade segments, an access window can be defined in the rotor blade with the blade segments are brought together. The access window can assist in the sealing of the spar cap cavities 36 so that adhesive may be subsequently injected therein.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A method of assembling a rotor blade, comprising:
   providing a first blade segment comprising a first shell portion and at least two first spar cap segments;
   providing a second blade segment comprising a second shell portion and at least two second spar cap segments, wherein an access region is defined in at least one of the first shell portion and the second shell portion;
   inserting the second blade segment into the first blade segment, wherein a spar cap cavity is formed between each set of corresponding first and second spar cap segments, and wherein an access window is defined by the access region at an interface between the first blade segment and the second blade segment, the access window providing access to the spar cap cavities;
   sealing the spar cap cavities; and,
   injecting an adhesive into the spar cap cavities to bond the blade segments together, wherein a scarf joint is formed between each set of corresponding first and second spar cap segments.
2. The method of clause 1, further comprising curing the adhesive.
3. The method of any preceding clause, further comprising covering the access window with an additional shell segment.
4. The method of any preceding clause, wherein the additional shell segment is secured to the cover the access window such that a substantially continuous aerodynamic profile is defined by the rotor blade.
5. The method of any preceding clause, further comprising connecting an additional structural element to at least one of the first shell portion and the second shell portion in the access window prior to covering the access window with the additional shell segment.
6. The method of any preceding clause, wherein the access region is formed at a leading edge of at least one of the first blade segment and the second blade segment.
7. The method of any preceding clause, wherein the access region is formed at a trailing edge of at least one of the first blade segment and the second blade segment.
8. The method of any preceding clause, wherein sealing the spar cap cavities comprises sealing two longitudinal sides and two transverse sides to the spar cap cavities.
9. The method of any preceding clause, wherein sealing the spar cap cavities comprises creating at least one injection port on each seal for injecting the adhesive into the spar cap cavities.
10. The method of any preceding clause, wherein sealing the spar cap cavities comprises sealing using at least one of tape, epoxy or glass composites.
11. A rotor blade assembly comprising:
   a first blade segment comprising a first shell portion and at least two first spar cap segments;
   a second blade segment comprising a second shell portion and at least two second spar cap segments, wherein an access region is defined in at least one of the first shell portion and the second shell portion; and
   wherein when the second blade segment is inserted into the first blade segment a spar cap cavity is formed between each set of corresponding first and second spar cap segments, and wherein an access window is defined by the access region at an interface between the first blade segment and the second blade segment, the access window providing access to the spar cap cavities.
12. The rotor blade assembly of any preceding clause, further comprising an additional shell segment that covers the access window.
13. The rotor blade assembly of any preceding clause, wherein the additional shell segment is secured to the cover the access window such that a substantially continuous aerodynamic profile is defined by the rotor blade assembly.
14. The rotor blade assembly of any preceding clause, further comprising an additional structural element connected to at least one of the first blade segment and the second blade segment in the access window internal the additional shell segment.
15. The rotor blade assembly of any preceding clause, wherein the additional structural element is integral with the additional shell segment.
16. The rotor blade assembly of any preceding clause, wherein the access region is formed at a leading edge of at least one of the first blade segment and the second blade segment.
17. The rotor blade assembly of any preceding clause, wherein the access region is formed at a trailing edge of at least one of the first blade segment and the second blade segment.
18. The rotor blade assembly of any preceding clause, wherein the spar cap cavities each comprise an outer seal that is made prior to injecting an adhesive into the spar cap cavities to bond the blade segments together.
19. The rotor blade assembly of any preceding clause, wherein the outer seal comprises at least one of tape, epoxy or glass composites.
20. The rotor blade assembly of any preceding clause, further comprising at least one injection port on each outer seal of the spar cap cavities for injecting the adhesive into the spar cap cavities.

## Claims

1. A method of assembling a rotor blade (10), comprising:
providing a first blade segment (12) comprising a first shell portion (19) and at least two first spar cap segments (26);
providing a second blade segment (14) comprising a second shell portion (21) and at least two second spar cap segments (28), wherein an access region (25) is defined in at least one of the first shell portion (19) and the second shell portion (21);
inserting the second blade segment (14) into the first blade segment (12), wherein a spar cap cavity (36) is formed between each set of corresponding first and second spar cap segments (26, 28), and wherein an access window (27) is defined by the access region (25) at an interface between the first blade segment (12) and the second blade segment (14), the access window (27) providing access to the spar cap cavities (36);
sealing the spar cap cavities (36); and
injecting an adhesive into the spar cap cavities (36) to bond the blade segments (12, 14) together, wherein a scarf joint (38) is formed between each set of corresponding first and second spar cap segments (26, 28).

2. The method of claim 1, further comprising curing the adhesive.

3. The method of any preceding claim, further comprising covering the access window (27) with an additional shell segment (23).

4. The method of any preceding claim, wherein the additional shell segment (23) is secured to the cover the access window (27) such that a substantially continuous aerodynamic profile is defined by the rotor blade.

5. The method of any preceding claim, further comprising connecting an additional structural element (29) to at least one of the first shell portion (19) and the second shell portion (21) in the access window prior to covering the access window with the additional shell segment.

6. The method of any preceding claim, wherein the access region (25) is formed at a leading edge or a trailing edge of at least one of the first blade segment and the second blade segment.

7. The method of any preceding claim, wherein sealing the spar cap cavities (36) comprises at least one of the following:
a) sealing two longitudinal sides and two transverse sides to the spar cap cavities;
b) creating at least one injection port on each seal for injecting the adhesive into the spar cap cavities; and
c) sealing using at least one of tape, epoxy or glass composites.

8. A rotor blade assembly (10) comprising:
a first blade segment (12) comprising a first shell portion (19) and at least two first spar cap segments (26);
a second blade segment (14) comprising a second shell portion (21) and at least two second spar cap segments (28), wherein an access region (25) is defined in at least one of the first shell portion (19) and the second shell portion (21); and
wherein when the second blade segment (14) is inserted into the first blade segment (12) a spar cap cavity (36) is formed between each set of corresponding first and second spar cap segments (26, 28), and wherein an access window (27) is defined by the access region (25) at an interface between the first blade segment (12) and the second blade segment (14), the access window (27) providing access to the spar cap cavities (36).

9. The rotor blade assembly (10) of claim 8, wherein the additional shell segment (23) is secured to the cover the access window (27) such that a substantially continuous aerodynamic profile is defined by the rotor blade assembly.

10. The rotor blade assembly (10) of claim 8 or claim 9, further comprising an additional structural element (29) connected to at least one of the first blade segment (12) and the second blade segment (14) in the access window internal the additional shell segment.

11. The rotor blade assembly (10) of any of claims 8 to 10, wherein the access region (25) is formed at a leading edge or at a trailing edge of at least one of the first blade segment and the second blade segment.

12. The rotor blade assembly (10) of claim 10 or claim 11, wherein the additional structural element (29) is integral with the additional shell segment.

13. The rotor blade assembly (10) of any of claims 8 to 12, wherein the spar cap cavities (36) each comprise an outer seal (56) that is made prior to injecting an adhesive into the spar cap cavities to bond the blade segments together.

14. The rotor blade assembly (10) of claim 13, wherein the outer seal (56) comprises at least one of tape, epoxy or glass composites.

15. The rotor blade assembly (10) of claim 13 or claim 14, further comprising at least one injection port on each outer seal (56) of the spar cap cavities for injecting the adhesive into the spar cap cavities (36).
